# EUROPEAN PATENT APPLICATION

(11) **EP 4 317 291 A1**
(43) Date of publication of application: **07.02.2024**
(21) Application number: 22780713.8
(22) Date of filing: 28.03.2022
(51) Int. Cl.: C08K 5/5415, C08K 7/06, C08L 101/00, H01M 50/103, H01M 50/122, H01M 50/143, H01M 50/342

(54) **RESIN COMPOSITION AND RESIN MOLDED BODY**

(30) Priority: 29.03.2021 JP 2021054780
(71) Applicant: Mitsubishi Materials Corporation, Tokyo 100-8117 (JP)
(72) Inventor: WAKAMATSU, Mariko, Amagasaki-shi, Hyogo 660-0856 (JP); ISHIKAWA, Fumiaki, Saitama-shi, Saitama 330-8508 (JP); HONJO, Hiromasa, Amagasaki-shi, Hyogo 660-0856 (JP)
(74) Representative: Hoffmann Eitle
(86) International application number: PCT/JP2022/014900
(87) International publication number: WO 2022/210502

(57) **Abstract**

A resin composition according to the present invention is characterized by containing, with respect to 100 parts by mass of the thermoplastic, carbon fibers in a range of 2 parts by mass or more and 70 parts by mass or less and a silane coupling agent in a range of 0.3 parts by mass or more and 7 parts by mass or less.

## Description

### TECHNICAL FIELD

The present invention relates to a fire-resistant resin composition and a resin molded body using the resin composition.

Priority is claimed on Japanese Patent Application No. 2021-054780, filed March 29, 2021, the content of which is incorporated herein by reference.

### BACKGROUND ART

In recent years, in order to reduce the weight of various devices, the exterior body and the like of components that have been conventionally formed of metal are often formed of a resin material. For example, an exterior body and the like of a lithium-ion secondary battery (hereinafter, may also be referred to as a "battery") is also often formed of a resin material in order to reduce the weight. In such a battery, with advancement of miniaturization and high energy density (energy density of 300 Wh/kg or more), there is a possibility that the battery generates heat and reaches a high temperature depending on the manner of utilization. Accordingly, the safety of the battery and the battery pack is more important.

For example, in a lithium-ion secondary battery, a thermal runaway may occur in a case of being overcharged or over-discharged, or in a case where internal short-circuit or external short-circuit is caused by applying an unexpected impact. In the lithium-ion secondary battery in which the thermal runaway has occurred, gas is generated to increase the internal pressure of the battery. When such a situation occurs, there is a possibility that, for example, the exterior may rupture due to an increase in the internal pressure. Therefore, exhaust holes, safety valves, and the like for degasification are provided in these batteries.

However, a high-temperature flame or high-temperature and high-pressure gas blow out through an exhaust hole or a safety valve for degasification provided in the lithium-ion secondary battery in which the thermal runaway has occurred, and the maximum temperature thereof may exceed 999°C in some cases. Therefore, there is a concern that this may cause deformation or melting of the resin material. In addition, in a vehicle fire or the like, when a lithium-ion secondary battery is exposed to an external flame, a high-temperature and high-pressure flame may blow out from the lithium-ion secondary battery due to heat from the outside, thereby secondary damage to occupants or peripheral components may be caused.

As a resin material that can suppress deformation or melting caused by such blowout of flame or high-temperature gas, for example, Patent Document 1 discloses a flame retardant resin composition that can suppress fluidization in a high-temperature environment by adding a fibrous substance.

In addition, Patent Document 2 discloses a polyphenylene sulfide resin composition containing carbon fibers pretreated with a silane coupling agent.

### [Citation List]

### [Patent Documents]

[Patent Document 1]
   Japanese Unexamined Patent Application, First Publication No. 2014-208802
[Patent Document 2]
   Japanese Unexamined Patent Application, First Publication No. H06-49362

### SUMMARY OF INVENTION

### Technical Problem

However, due to the high energy density of batteries in recent years, the output of a flame generated during a thermal runaway has increased remarkably. When a lithium-ion secondary battery, which has rapidly spread in recent years, ignites, the output of the flame is considered to be about 1000 W. The evaluation of melt deformation due to flame is carried out only for a flame having an output of 500 W even in a product safety standard (UL standard) formulated by the Underwriters Laboratories, and under the condition that the output exceeds 1000 W, even the resin compositions disclosed in Patent Document 1 and Patent Document 2 may melt or fluidize.

The present invention has been made in view of such a background, and an objective of the present invention is to provide a resin composition capable of suppressing melting, deformation, and fluidization due to the injection of high-temperature gas or a flame, and a resin molded body using the resin composition.

### Solution to Problem

The present inventors found that the resin composition is configured to contain, with respect to 100 parts by mass of the thermoplastic, carbon fibers in a range of 2 parts by mass or more and 70 parts by mass or less of and a silane coupling agent in a range of 0.3 parts by mass or more and 7 parts by mass or less, thereby the melt deformation amount when a flame having an output of 1000 W or more is brought into contact with the resin composition, can be suppressed.

In order to solve the above issue, this invention proposes the following means.

That is, a resin composition according to the present invention is characterized by containing, with respect to 100 parts by mass of the thermoplastic, carbon fibers in a range of 2 parts by mass or more and 70 parts by mass or less of and a silane coupling agent in a range of 0.3 parts by mass or more and 7 parts by mass or less.

According to the present invention, a resin composition which is capable of suppressing melt deformation and fluidization, for example, even when the flame radiation is performed at about 1000 W can be obtained by containing, with respect to 100 parts by mass of a thermoplastic, carbon fibers at a ratio of 2 parts by mass or more and 70 parts by mass or less and a silane coupling agent at a ratio of 0.3 parts by mass or more and 7.0 parts by mass or less.

In addition, in the present invention, the content ratio (silane coupling agent/carbon fibers) of the silane coupling agent to the carbon fibers may be 0.01% or more.

In addition, in the present invention, the amount of the carbon fibers is 15 parts by mass or more and 70 parts by mass or less with respect to 100 parts by mass of the thermoplastic, or the content ratio (silane coupling agent/carbon fibers) of the silane coupling agent to the carbon fibers may be 0.1 or more.

In addition, in the present invention, the thermoplastic may include at least one of polyphenylene sulfide, polyamide, polybutylene terephthalate, a modified polyphenylene ether, and polycarbonate.

In addition, in the present invention, the silane coupling agent may be at least one of an organosilicon compound and a siloxane compound.

In addition, in the present invention, the organosilicon compound may be at least one of an amine-based silane coupling agent and an epoxy-based silane coupling agent.

In addition, in the present invention, the resin composition may further contain a fluororesin in a range of 1 part by mass or more and 50 parts by mass or less with respect to 100 parts by mass of the thermoplastic.

The resin molded body of the present invention is a resin molded body formed of the resin composition described above, and is characterized by being attached to an outer periphery of one or more lithium-ion secondary battery cells having a safety valve or an exhaust hole to cover at least the safety valve or the exhaust hole.

### ADVANTAGEOUS EFFECTS OF INVENTION

According to the present invention as described above, it is possible to provide a resin composition capable of suppressing melting, deformation, and fluidization due to the injection of high-temperature gas or a flame, and a resin molded body using the resin composition.

### BRIEF DESCRIPTION OF DRAWINGS

FIG. 1 is a perspective view of a lithium-ion secondary battery cell to which a resin molded body according to an embodiment of the present invention is attached.
FIG. 2 is a perspective view showing a lithium-ion secondary battery cell to which a resin molded body according to an embodiment of the present invention is attached.
FIG. 3 is a perspective view of a lithium-ion secondary battery cell to which the resin molded body of FIG. 2 is attached.
FIG. 4 is a sectional view taken along line A-A of FIG. 3.

### DESCRIPTION OF EMBODIMENTS

Hereinafter, a resin composition according to an embodiment of the present invention and a resin molded body using the resin composition are described in detail with reference to the drawings as appropriate. The drawings used in the following description may be drawn with specific portions enlarged as appropriate to facilitate comprehension of the features of the present invention, and the dimensional ratios and the like between the constituent elements may differ from the actual values. Materials, dimensions, and the like provided in the following description are exemplary examples, and the present invention is not limited thereto, and can be appropriately modified and implemented within the range in which the effects are exhibited.

### (Resin composition)

The resin composition according to an embodiment of the present invention is constituted of a mixture of a thermoplastic, carbon fibers, and a silane coupling agent. This resin composition contains, with respect to 100 parts by mass of a thermoplastic, carbon fibers at a ratio of 2 parts by mass or more and 70 parts by mass or less and a silane coupling agent at a ratio of 0.3 parts by mass or more and 7.0 parts by mass or less.

The amount of the carbon fibers contained in the resin composition with respect to 100 parts by mass of the thermoplastic may be 7 parts by mass or more and may be 23 parts by mass or less.

In addition, with respect to 100 parts by mass of the thermoplastic, the amount of the silane coupling agent contained in the resin composition may be 0.7 parts by mass or more and may be 2.3 parts by mass or less.

In addition, this resin composition may further contain a fluororesin in a range of 1 part by mass or more and 50 parts by mass or less with respect to 100 parts by mass of the thermoplastic.

In a case where the amount of the carbon fibers is less than 2 parts by mass, flame retardancy cannot be sufficiently ensured, and thus the carbon fibers may be easily melted and deformed due to the flame. In addition, also in a case where the amount of the silane coupling agent is less than 0.3 parts by mass, flame retardancy cannot be sufficiently ensured, and thus the carbon fibers may be easily melted and deformed due to the flame.

In addition, the content ratio (silane coupling agent/carbon fibers) of the silane coupling agent to the carbon fibers in the resin composition is preferably 0.01 or more and 80 or less.

In addition, it is also preferable that the amount of the carbon fibers contained in the resin composition is 15 parts by mass or more and 70 parts by mass or less with respect to 100 parts by mass of the thermoplastic, or the content ratio (silane coupling agent/carbon fibers) of the silane coupling agent to the carbon fibers in the resin composition is 0.1 or more.

That is, the mass ratio of the carbon fibers to 100 parts by mass of the thermoplastic is preferably 15 parts by mass or more and 70 parts by mass or less.

In addition, it is also preferable that the mass ratio of the carbon fibers to 100 parts by mass of the thermoplastic is 2 parts by mass or more and 70 parts by mass or less, and the content ratio of the silane coupling agent to the carbon fibers is 0.1 or more.

Examples of the thermoplastic used in the resin composition include a mixture of any one kind or two or more kinds of polyphenylene sulfide (PPS), polyamide (PA), polybutylene terephthalate (PBT), a modified polyphenylene ether (mPPE), polycarbonate (PC), or polypropylene (PP).

Among these, PPS is particularly preferable as the thermoplastic because it has a high melting point (278°C) and a high glass transition temperature (92°C to 126°C). As PPS which is a thermoplastic suitable for the resin composition, any of an oxidatively crosslinked PPS in which a heat treatment is performed in the presence of oxygen to increase the melt viscosity, and a linear PPS in which lithium chloride, an organic acid salt, water, or the like is added in the polymerization line to increase the molecular weight while maintaining the linear shape, can be used. In addition, an oxidatively crosslinked PPS and a linear PPS can be mixed and used.

As carbon fibers suitable for the resin composition, any of polyacrylonitrile (PAN)-based carbon fibers using acrylic fibers and pitch-based carbon fibers using pitch can be used. In the present embodiment, pitch-based carbon fibers may be used as the carbon fibers.

Examples of the pitch-based carbon fibers include isotropic pitch-based carbon fibers and mesophase pitch-based carbon fibers, and any of pitch-based carbon fibers can be used.

As examples of the shape of the carbon fibers used in the resin composition, a single fiber may have a fiber diameter of 1 to 20 µm, an average fiber length of 0.01 to 10 mm, and an aspect ratio of about 1.5 to 1,300.

The silane coupling agent contained in the resin composition is a component that contributes to deformation resistance and is capable of suppressing dropping of the melt resin composition during combustion.

The silane coupling agent contained in the resin composition may be, for example, at least one of an organosilicon compound and a siloxane compound. In addition, the silane coupling agent (organosilicon compound) may be at least one of an amine-based silane coupling agent and an epoxy-based silane coupling agent. In a case where the amine-based silane coupling agent and the epoxy-based silane coupling agent are compared, an amine-based silane coupling agent having an amino terminal is more preferable.

Examples of the amine-based silane coupling agent include 3-aminopropyltriethoxysilane, 3-aminopropyltrimethoxysilane, N-2-(aminoethyl)-3-aminopropyltrimethoxysilane, N-2-(aminoethyl)-3-aminopropylmethyldimethoxysilane, N-phenyl-3-aminopropyltrimethoxysilane, and 3-triethoxysilyl-N-(1,3-dimethylbutylidene)propylamine.

In addition, examples of the epoxy-based silane coupling agents include 3-glycidoxypropyltriethoxysilane, 3-glycidoxypropylmethyldiethoxysilane, 3-glycidoxypropyltrimethoxysilane, 3-glycidoxypropylmethyldimethoxysilane, 2-(3,4-epoxycyclohexyl)ethyltrimethoxysilane.

Furthermore, as the silane coupling agent contained in the resin composition, various silane coupling agents such as acrylic (for example, 3-acryloxypropyltrimethoxysilane), vinyl-based, methacrylic, styryl-based, ureido-based, isocyanate-based, isocyanurate-based, and mercapto-based can be used.

In addition, as the silane coupling agent, in addition to the liquid silane coupling agent such as amine-based silane coupling agents, epoxy-based silane coupling agents, acrylic, vinyl-based, methacrylic, styryl-based, ureido-based, isocyanate-based, isocyanurate-based, and mercapto-based, which are described above, a solid silane coupling agent can also be used.

Examples of the solid silane coupling agent include X-12-1273ES (manufactured by Shin-Etsu Chemical Co., Ltd.).

When a liquid silane coupling agent and a solid silane coupling agent are compared, the liquid silane coupling agent is excellent in that the liquid silane coupling agent has a functional group and thus reactivity can be expected (a high effect can be expected in principle), and the solid silane coupling agent is excellent in terms of ease of handling.

In a case where a fluororesin is contained in the resin composition, examples of the fluororesin include polytetrafluoroethylene (PTFE). As the PTFE, a powdered PTFE is preferably used. For example, a powdered PTFE having an average particle diameter of 10 to 30 µm and a specific surface area of 0.5 to 5 m²/g obtained by the BET method can be used. The fluororesin may include a fluororesin in a range of 1 part by mass or more and 50 parts by mass or less with respect to 100 parts by mass of the thermoplastic. Examples of the fluororesin include PTFE, perfluoroalkoxyalkane (PFA), and perfluoroethylene propene copolymer (FEP).

The resin composition may further contain carbon black as a colorant, a polyolefin wax, a stearyl alcohol, or the like as a mold release agent, and hydrotalcite, zinc carbonate, or the like as a metal mold corrosion inhibitor.

A known production method may be applied to the production of the resin composition as described above.

For example, the thermoplastic, the carbon fibers, the silane coupling agent, the metal mold corrosion inhibitor, and the mold release agent are put into the twin-screw extruder, and for example, while controlling the kneading processing temperature to 270°C or more and 300°C or less and the screw rotation speed to 100 rpm or more and 300 rpm or less, the granulation is performed at the kneading processing time of 30 minutes or more and 60 minutes or less, thereby a pellet-shaped resin composition can be formed.

At the time of the kneading processing, it is preferable that the thermoplastic and the silane coupling agent are first blended, carbon fibers are next added thereto and blended, and then kneading is performed. As a result, the silane coupling agent can be uniformly dispersed in the thermoplastic, and a function of suppressing fluidization and deformation due to the flame can be enhanced.

Specifically, the dry blended raw material obtained by dry blending the thermoplastic and the silane coupling agent, and further dry blending carbon fibers, the metal mold corrosion inhibitor, the mold release agent, and the colorant, may be discharged from the main feeder of the twin-screw extruder to perform kneading. Alternatively, as another method, while discharging the dry blended raw material obtained by dry blending the thermoplastic and the silane coupling agent, and further dry blending the metal mold corrosion inhibitor, the mold release agent, and the colorant, from the main feeder of the twin-screw extruder, the carbon fibers may be discharged from the side feeder to perform kneading. By manufacturing using the method of supplying the carbon fibers from the side feeder, it is possible to prevent the fiber lengths of the carbon fibers from shortening during dry blending.

Then, the resin molded body can be produced by molding the obtained resin composition by a known molding method such as extrusion molding using an extruder, press molding using a press machine, or injection molding using an injection molding machine.

According to the resin composition of the present embodiment, by containing, with respect to 100 parts by mass of a thermoplastic, carbon fibers at a ratio of 2 parts by mass or more and 70 parts by mass or less and a silane coupling agent at a ratio of 0.3 parts by mass or more and 7.0 parts by mass or less, melt deformation and fluidization can be suppressed, for example, even when the flame radiation is performed at about 1000 W.

### (Resin molded body)

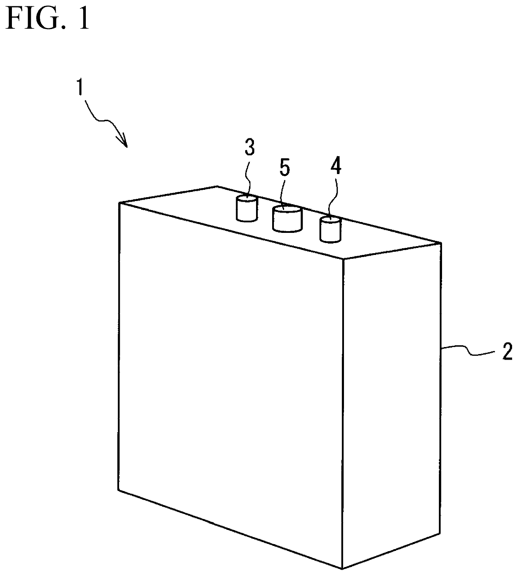

FIG. 1 is a perspective view of a lithium-ion secondary battery cell to which a resin molded body according to an embodiment of the present invention is attached.

This lithium-ion secondary battery cell 1 is, for example, a square battery cell, in which a positive electrode terminal 3 and a negative electrode terminal 4 are provided on one end surface (upper surface in FIG. 1) of an exterior can 2 that is a battery container, and a safety valve 5 is provided between the positive electrode terminal 3 and the negative electrode terminal 4.

The safety valve 5 is operated when the lithium-ion secondary battery cell 1 thermally runs away and the internal pressure thereof rises, to prevent the exterior can 2 from rupturing by allowing a high-temperature and high-pressure gas to blow out.

In a case where a thermal runaway of the lithium-ion secondary battery cell 1 occurs, there is a possibility of igniting due to overheating, and when the high-temperature and high-pressure gas blown out from the safety valve 5 spreads over a wide area at a breath, it is difficult to prevent the spread of fire and burning.

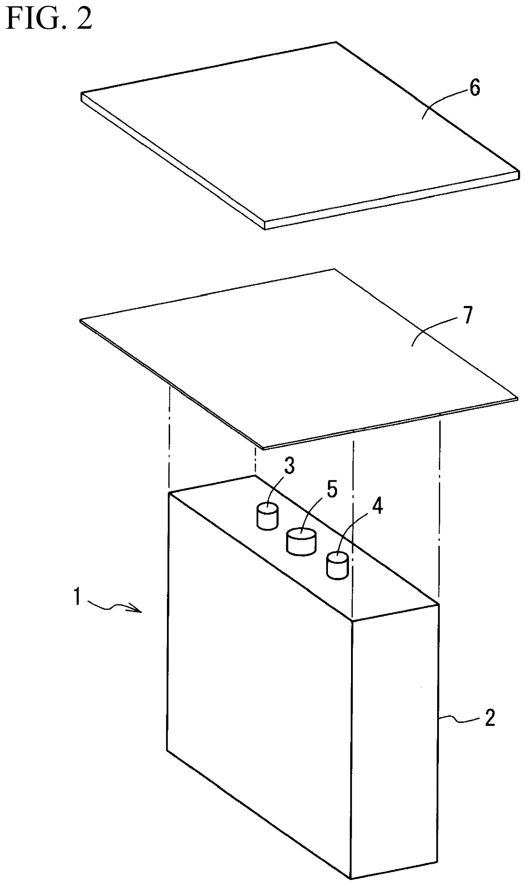

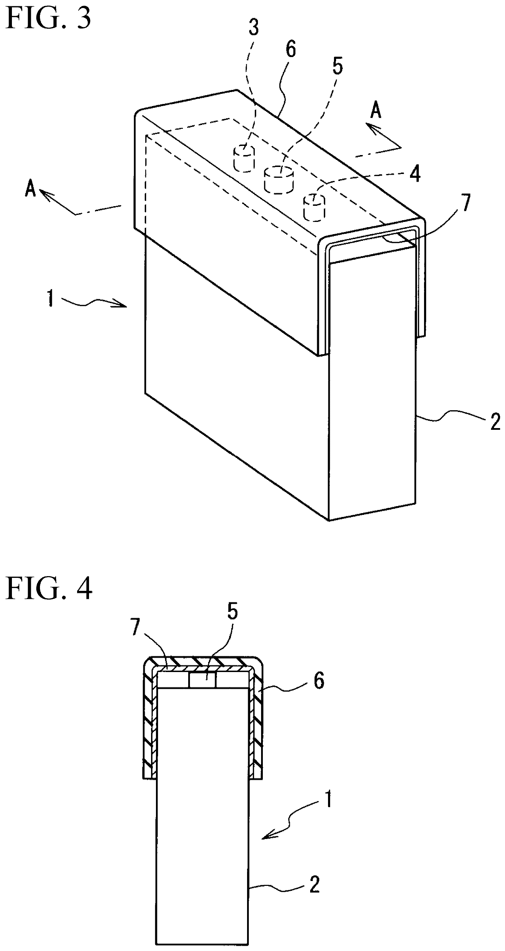

Therefore, in this embodiment, as shown in FIG. 2, FIG. 3, and FIG. 4, which is a cross-sectional view taken along line A-A of FIG. 3, the sheet-shaped resin molded body 6 having flexibility is attached to the outer periphery of the lithium-ion secondary battery cell 1 directly or via the insulating sheet 7 (with the insulating sheet 7 interposed therebetween) to cover at least the safety valve 5. In addition, in a case where the resin molded body 6 is an insulating material or in a case where insulating properties are not required, the resin molded body 6 may be attached without the insulating sheet 7. In a case where the insulating sheet 7 is present, the portion of the insulating sheet 7, which covers the safety valve 5 may or may not abut to the safety valve 5. In a case where the insulating sheet 7 is absent, the portion of the resin molded body 6, which covers the safety valve 5 may or may not abut to the safety valve 5.

In this embodiment, both the insulating sheet 7 and the sheet-shaped resin molded body 6 have substantially the same size as a rectangular shape and is attached to cover not only the upper surface of the rectangular lithium-ion secondary battery cell 1 including the safety valve 5 but also the upper part of the front surface and the back surface (left and right surfaces in FIG. 4). However, the sizes of the resin molded body 6 and the insulating sheet 7 may not be the same, and the resin molded body 6 may be larger than the insulating sheet 7 or the insulating sheet 7 may be larger than the resin molded body 6. Both may be joined in advance.

The lead wire (not shown) connected to the positive electrode terminal 3 and the negative electrode terminal 4 of the lithium-ion secondary battery cell 1 is drawn out using the side surface which is not covered with the insulating sheet 7 and the resin molded body 6.

The lithium-ion secondary battery cell 1 to which the insulating sheet 7 and the sheet-shaped resin molded body 6 is attached is accommodated in an exterior case (not shown). Inside the exterior case, the resin molded body 6 that covers the upper part of the front surface and the back surface of the lithium-ion secondary battery cell 1 is held by being pressed by the inner wall face of the exterior case.

The resin molded body 6 according to this embodiment is obtained by molding and curing the resin composition according to the above-described embodiment, and the thermal conductivity (measurement temperature: 50°C) of the resin molded body 6 measured by a unidirectional heat flow steady state comparison method (SCHF), for example, in accordance with JIS H7903: 2008 is less than 1.0 W/m·K.

In a case where this thermal conductivity is 1.0 W/m·K or more, there is concern that when a thermal runaway occurs in the lithium-ion secondary battery, due to the high-temperature and high-pressure gas blown out from the safety valve or the discharge hole, heat is conducted via the resin molded body 6 to the member in the outer periphery of the resin molded body 6, for example, the exterior case that accommodates the lithium-ion secondary battery cell 1 covered with the sheet-shaped resin molded body 6, to melt and deform the exterior case.

The lower the thermal conductivity is, the more preferable it is, but the lower limit thereof is, for example, 0.1 W/m·K.

In this embodiment, the resin molded body 6 has a sheet shape having a uniform thickness, the thickness of the sheet-shaped resin molded body 6 may be 0.5 mm or more and 10.0 mm or less, and it is preferably 0.7 mm or more and 5 mm or less, and more preferably 1.0 mm or more and 2 mm or less. Although it is desirable that the thickness of the resin molded body 6 is uniform, the thickness of a portion of the resin molded body 6, which covers the safety valve 5 may be in the above range, and the thickness of the other portion may not be in the above range.

In a case where this thickness is less than 0.5 mm, there is a concern that a through hole is formed in the resin molded body 6 by the high-temperature and high-pressure gas blown out from the safety valve 5, and the high-temperature and high-pressure gas blow out from the through hole, thereby spreading fire to and burning the member outside the lithium-ion secondary battery cell 1 covered with the insulating sheet 7 and the sheet-shaped resin molded body 6. In addition, the through hole serves as an air (oxygen) supply port, and there is a concern that the spread of the fire or burning of the lithium-ion secondary battery cell 1 itself covered with the insulating sheet 7 and the sheet-shaped resin molded body 6 is increased.

In a case where the thickness of the sheet-shaped resin molded body 6 exceeds 10.0 mm, high-temperature and high-pressure gas can be blocked, that is, a through hole is not formed, but the size of the resin molded body 6 becomes large, and the molding processing becomes complicated. In addition, it is difficult to accommodate the lithium-ion secondary battery cell 1 in the existing exterior case for accommodating the lithium-ion secondary battery cell 1.

As the hardness of the surface of the resin molded body 6, a value measured with a type D durometer using a sheet having a thickness of the resin molded body of 2 mm based on JIS K7215 is preferably 50 or more. In a case where the hardness of the surface is less than 50, there is a concern that the resin molded body 6 is damaged or a through hole is formed due to the high-temperature and high-pressure gas (particularly, the influence of the pressure (blowout power)) blown out from the safety valve 5. The upper limit value of the hardness of the surface is 90 as an appropriate upper limit in the above standard, but may exceed 90 as long as it is within a moldable range. In a general measuring device, it is possible to measure up to about 100, and the hardness of the surface of the resin molded body 6 displayed by the measuring device may be 100 or less.

As described above, since the resin molded body 6 according to the present embodiment is formed to cover the safety valve 5 of the lithium-ion secondary battery cell 1 by using the above-described resin composition, even in a case where the lithium-ion secondary battery causes a thermal runaway, the through hole is not formed in the resin molded body 6 due to the high-temperature and high-pressure gas blown out from the safety valve 5, and it is possible to suppress the spread of fire and the burning due to the blowout of the high-temperature and high-pressure gas.

### Examples

### (Flame retardancy evaluation 1)

Hereinafter, as the flame retardancy evaluation 1, the resin compositions (samples) of Invention Examples 1 to 19 and Comparative Examples 1 to 3 were prepared in which a kind of a silane coupling agent, and the amount of mixing (composition ratio), with respect to 100 parts by mass of a thermoplastic, of PTFE, carbon fibers, a silane coupling agent, a mold release agent, a colorant, and a metal mold corrosion inhibitor were changed. Table 1 shows the composition ratio (parts by mass) of each of the samples. Each component shown in Table 1 was weighed, dry blended, and then granulated using a twin-screw extruder to granulate each of the resin compositions according to Invention Examples 1 to 19 and Comparative Examples 1 to 3. Injection molding was performed using this granulated product to obtain a sample.

**[Table 1]**

| | Thermoplastic | Silane coupling agent | Com position ratio (parts by mass) | | | | | | | Flame retardancy evaluation 1 |
|---|---|---|---|---|---|---|---|---|---|---|
| | | | Thermoplastic | PTFE | Carbon fibers | Silane coupling agent | Mold release agent (polyethylene wax) | Colorant (carbon black) | Metal mold corrosion inhibitor (zinc carbonate) | |
| Invention Example 1 | PPS | Epoxy-based | 100 | - | 7.692 | 2.308 | 0.462 | 0.923 | 0.769 | A |
| Invention Example 2 | PPS | Amine-based | 100 | - | 15.385 | 2.308 | 0.462 | 0.923 | 0.769 | B |
| Invention Example 3 | PPS | Epoxy-based | 100 | - | 23.077 | 0.769 | 0.462 | 0.923 | 0.769 | B |
| Invention Example 4 | PPS | Amine-based | 100 | - | 3.846 | 0.769 | 0.462 | 0.923 | 0.769 | B |
| Invention Example 5 | PPS | Amine-based | 100 | - | 15.385 | 0.769 | 0.462 | 0.923 | 0.769 | B |
| Invention Example 6 | PPS | Amine-based | 100 | 46.154 | 15.385 | 0.769 | 0.462 | 0.923 | 0.769 | B |
| Invention Example 7 | PPS | Amine-based | 100 | - | 7.692 | 0.769 | 0.462 | 0.923 | 0.769 | B |
| Invention Example 8 | PPS | Acrylic | 100 | - | 23.077 | 2.308 | 0.462 | 0.923 | 0.769 | B |
| Invention Example 9 | PPS | Amine-based | 100 | - | 23.077 | 0.385 | 0.462 | 0.923 | 0.769 | c |
| Invention Example 10 | PPS | Amine-based | 100 | - | 7.692 | 0.385 | 0.462 | 0.923 | 0.769 | C, |
| Invention Example 11 | PPS | Amine-based | 100 | 46.154 | 7.692 | 0.769 | 0.462 | 0.923 | 0.769 | c |
| Invention Example 12 | PPS | Epoxy-based | 100 | - | 15.385 | 0.385 | 0.462 | 0.933 | 0.769 | C |
| Invention Example 13 | PPS | Solid | 100 | < | 7.692 | 0.769 | 0.462 | 0.923 | 0.769 | D |
| Invention Example 14 | PPS | Acrylic | 100 | - | 15.385 | 0.769 | 0.462 | 0.923 | 0.769 | D |
| Invention Example 15 | PPS | Acrylic | 100 | - | 7.692 | 0.385 | 0.462 | 0.923 | 0.769 | D |
| Invention Example 16 | PPS | Solid | 100 | 46.154 | 7.692 | 0.769 | 0.462 | 0.923 | 0.769 | D |
| Invention Example 17 | PPS | Epoxy-based | 100 | - | 2.308 | 6.154 | 0.462 | 0.923 | 0.769 | B |
| Invention Example 18 | PPS | Epoxy-based | 100 | - | 3.846 | 4.615 | 0.462 | 0.923 | 0.769 | B |
| Invention Example 19 | PPS | Epoxy-based | 100 | - | 69.231 | 0.769 | 0.462 | 0.923 | 0.769 | B |
| Comparative Example 1 | PPS | - | 100 | - | 7.692 | - | 0.462 | 0.923 | 0.769 | E |
| Comparative Example 2 | PPS | Amine-based | 100 | - | - | 0.769 | 0.462 | 0.923 | 0.769 | E |
| Comparative Example 3 | PPS | - | 100 | - | - | - | 0.462 | 0.923 | 0.769 | E |

The raw materials used for manufacturing the resin composition are as follows.
(1) PPS: polyphenylene sulfide
(2) Silane coupling agent:
   (2-1) Amine-based: liquid silane coupling agent
   (2-2) Epoxy-based: liquid silane coupling agent
   (2-3) Acrylic: liquid silane coupling agent
   (2-4) Solid: solid silane coupling agent
(3) Carbon fibers: pitch-based carbon fibers, average fiber length of 0.36 mm, fiber diameter of 13 µm, aspect ratio of 28
(4) Fluororesin (PTFE): powdered, average particle diameter of 18 µm, BET specific surface area of 2 m²/g
(5) Colorant: carbon black
(6) Mold release agent: polyolefin wax
(7) Metal mold corrosion inhibitor: zinc carbonate (ZnCO₃)

Then, the flame retardancy evaluation (flame retardancy evaluation 1) was performed for each of the resin compositions according to Invention Examples 1 to 19 and Comparative Examples 1 to 3. In the test method of flame retardancy evaluation 1, a burner having an output of 5,580 W was fixed vertically downward, a resin composition (sample) having a size of 100 mm × 120 mm × 2 mm was prepared, and each sample was disposed horizontally with a floor at a position 170 mm from the nozzle of the burner. Then, the burner was ignited and a flame was applied to each sample. Table 1 shows the results of the flame retardancy evaluation 1.

Distance between sample and nozzle of burner: 170 mm
Local exhaust by draft
Thermal power: 5,580 W
Air temperature: 18°C
Humidity: 55% RH
Weather: fine

The test was terminated when a part of the sample melted and dropped onto the floor surface.

The flame retardancy evaluation 1 was performed based on the time when the deformation amount reached 10 mm (the longer the time is, the higher the flame retardancy), as the evaluation standard.
A: 113 seconds or more
B: 74 seconds or more and less than 113 seconds
C: 63 seconds or more and less than 74 seconds
D: 49 seconds or more and less than 63 seconds
E: Less than 49 seconds

According to the flame retardancy evaluation 1 shown in Table 1, it could be confirmed that in the resin composition according to Invention Examples 1 to 19 containing, with respect to 100 parts by mass of the thermoplastic, the carbon fibers in a range of 2 parts by mass or more and 70 parts by mass or less and the silane coupling agent in a range of 0.3 parts by mass or more and 7 parts by mass or less, the 10 mm deformation amount was at least 49 seconds or more, and excellent flame retardancy could be ensured.

On the other hand, in the resin compositions according to Comparative Examples 1 to 3 which did not contain any one of the carbon fibers or the silane coupling agent, or did not contain both of them, it could be confirmed that the 10 mm deformation amount was less than 49 seconds, the flame retardancy could not be ensured, and melt deformation is easily caused due to flame.

### (Flame retardancy evaluation 2)

Next, as the flame retardancy evaluation 2, the resin compositions (samples) according to Invention Examples 7 and 20 to 24 were prepared in which only a kind of a thermoplastic was changed while the amount of mixing (composition ratio), with respect to 100 parts by mass of a thermoplastic, of carbon fibers, a silane coupling agent, a mold release agent, a colorant, and a metal mold corrosion inhibitor was set to be constant. In addition, resin compositions (samples) according to Comparative Examples 4 to 7 were prepared in which only thermoplastic was used. Table 2 shows the composition ratio (parts by mass) of each sample. Each component shown in Table 2 was weighed, dry blended, and then granulated using a twin-screw extruder to granulate each of the resin compositions according to Invention Examples 7, and 20 to 24. Injection molding was performed using this granulated product to obtain a sample. In addition, each thermoplastic of Comparative Examples 4 to 7 was prepared.

**[Table 2]**

| | Thermoplastic | Silane coupling agent | Composition ratio (parts by mass) | | | | | | Flame retardancy evaluation 2 |
|---|---|---|---|---|---|---|---|---|---|
| | | | Thermoplastic | Carbon fibers | Silane coupling agent | Mold release agent (polyethylene wax) | Colorant (carbon black) | Metal mold corrosion inhibitor (zinc carbonate) | |
| Invention Example 7 | PPS | Amine | 100 | 7.692 | 0.769 | 0.462 | 0.923 | 0.769 | Good |
| Invention Example 20 | PBT | Amine | 100 | 7.692 | 0.769 | 0.462 | 0.923 | 0.769 | Good |
| Invention Example 21 | PA6 | Amine | 100 | 7.692 | 0.769 | 0.462 | 0.923 | 0.769 | Good |
| Invention Example 22 | mPPE | Amine | 100 | 7.692 | 0.769 | 0.462 | 0.923 | 0.769 | Passing |
| Invention Example 23 | PC | Amine | 100 | 7.692 | 0.769 | 0.462 | 0.923 | 0.769 | Passing |
| Invention Example 24 | PP | Amine | 100 | 7.692 | 0.769 | 0.462 | 0.923 | 0.769 | Passing |
| Comparative Example 4 | PP | - | - | - | - | - | - | - | Failing |
| Comparative Example 5 | PBT | - | - | - | - | - | - | - | Failing |
| Comparative Example 6 | mPPE | - | - | - | - | - | - | - | Failing |
| Comparative Example 7 | PC | - | - | - | - | - | - | - | Failing |

The raw materials used for manufacturing the resin composition are as follows.
(1) PPS: polyphenylene sulfide
(2) PBT: Polybutylene terephthalate
(3) PA6: polyamide 6 which is a kind of polyamide
(4) mPPE: modified polyphenylene ether
(5) PC: polycarbonate
(6) PP: polypropylene
(7) Carbon fibers: pitch-based carbon fiber, average fiber length of 0.36 mm, fiber diameter of 13 µm, aspect ratio of 28
(8) PTFE: powdered fluororesin, average particle diameter of 18 µm, BET specific surface area of 2 m²/g
(9) Colorant: carbon black
(10) Mold release agent: polyolefin wax
(11) Metal mold corrosion inhibitor: zinc carbonate (ZnCO₃)

Then, the flame retardancy evaluation (flame retardancy evaluation 2) was performed for each of the resin compositions according to Invention Examples 7 and 20 to 24 and Comparative Examples 4 to 7. In the test method of flame retardancy evaluation 2, a burner having an output of 5,580 W was fixed vertically downward, a resin composition (sample) having a size of 100 mm × 120 mm × 2 mm was prepared, and each sample was disposed horizontally with a floor at a position 200 mm from the nozzle of the burner. Then, the burner was ignited and a flame was applied to each sample. Table 2 shows the results of the flame retardancy evaluation 2.

Distance between sample and nozzle of burner: 200 mm
Local exhaust by draft
Thermal power: 5,580 W
Air temperature: 18°C
Humidity: 55% RH
Weather: fine

The flame retardancy evaluation 2 was performed by measuring the deformation amount of each sample at 40 seconds after the start of combustion of the burner, as the evaluation standard.

Good: the deformation amount of the sample at 40 seconds after the start of the burner combustion was less than 2 mm.

Passing: the deformation amount of the sample at 40 seconds after the start of the burner combustion was 2 mm or more and less than 20 mm.

Failing: the deformation amount of the sample 40 seconds after the start of the burner combustion was 20 mm or more, or the molten resin was dropped.

According to the results shown in Table 2, it was confirmed that the flame retardancy is most excellent in Invention Examples 7, 20, and 21 in which each of PPS, PBT, and PA6 was used as the thermoplastic, and the resin composition contains, with respect to 100 parts by mass of the thermoplastic, the carbon fibers in a range of 2 parts by mass or more and 70 parts by mass or less and the silane coupling agent in a range of 0.3 parts by mass or more and 7 parts by mass or less. In addition, it was confirmed that the excellent flame retardancy is exhibited also in Invention Examples 22 to 24 in which each of mPPE, PC, and PP was used as the thermoplastic, and the resin composition contains, with respect to 100 parts by mass of the thermoplastic, the carbon fibers in a range of 2 parts by mass or more and 70 parts by mass or less and the silane coupling agent in a range of 0.3 parts by mass or more and 7% by mass or less.

On the other hand, it was confirmed that in any of Comparative Examples 4 to 7 which contained only the thermoplastic resin and did not contain the carbon fibers or the silane coupling agent, the deformation amount was 20 mm or more or dripping of the molten resin occurred before 40 seconds had elapsed, and thus it is difficult to use the resin composition as a flame retardant resin.

In the above-described flame retardancy evaluations 1 and 2, some samples contain each of a metal mold corrosion inhibitor, a mold release agent, and a colorant, but in the resin composition constituting the resin molded body according to the present invention, these metal mold corrosion inhibitor, mold release agent, and colorant are not essential components. A resin molded product having excellent flame retardancy can be obtained even without containing these metal mold corrosion inhibitor, the mold release agent, and the colorant.

In addition, the contents of each of the metal mold corrosion inhibitor, the mold release agent, and the colorant in the above-described flame retardancy evaluations 1 and 2 are examples, and the contents of each of the metal mold corrosion inhibitors, the mold release agents, and the colorants can be increased or decreased to any amount as necessary, and the contents are not limited thereto.

### REFERENCE SIGNS LIST

1: Lithium-ion secondary battery cell
2: Exterior can
3: Positive electrode terminal
4: Negative electrode terminal
5: Safety valve
6: Resin molded body
7: Insulating sheet

## Claims

1. A resin composition comprising:
carbon fibers;
a silane coupling agent; and
a thermoplastic,
wherein with respect to 100 parts by mass of the thermoplastic resin, an amount of the carbon fibers is in a range of 2 parts by mass or more and 70 parts by mass or less and an amount of the silane coupling agent is in a range of 0.3 parts by mass or more and 7 parts by mass or less.

2. The resin composition according to Claim 1,
wherein a content ratio (silane coupling agent/carbon fibers) of the silane coupling agent to the carbon fibers is 0.01 or more.

3. The resin composition according to Claim 1,
wherein the amount of the carbon fibers is 15 parts by mass or more and 70 parts by mass or less with respect to 100 parts by mass of the thermoplastic.

4. The resin composition according to Claim 1 or 2,
wherein a content ratio (silane coupling agent/carbon fibers) of the silane coupling agent to the carbon fibers is 0.1 or more.

5. The resin composition according to any one of Claims 1 to 4,
wherein the thermoplastic includes at least one of polyphenylene sulfide, polyamide, polybutylene terephthalate, a modified polyphenylene ether, and polycarbonate.

6. The resin composition according to any one of Claims 1 to 5,
wherein the silane coupling agent is at least one of an organosilicon compound and a siloxane compound.

7. The resin composition according to Claim 6,
wherein the organosilicon compound is at least one of an amine-based silane coupling agent and an epoxy-based silane coupling agent.

8. The resin composition according to any one of Claims 1 to 7, further comprising:
a fluororesin,
wherein an amount of the fluororesin is in a range of 1 part by mass or more and 50 parts by mass or less with respect to 100 parts by mass of the thermoplastic.

9. A resin molded body formed of the resin composition according to any one of Claims 1 to 8,
wherein the resin molded body is attached to an outer periphery of one or more lithium-ion secondary battery cells having a safety valve or an exhaust hole to cover at least the safety valve or the exhaust hole.
